# FASCICULE DE BREVET EUROPEEN

(11) **EP 3 657 113 B1**
(45) Date de publication et mention de la délivrance du brevet: **24.03.2021**
(21) Numéro de dépôt: 19210128.5
(22) Date de dépôt: 19.11.2019
(51) Int. Cl.: F28F 3/12, B22D 19/00, B22F 3/15, B22F 3/24, B22F 7/08, B23K 1/008, B23K 1/19, B23K 9/025, B23K 9/167, B23K 9/23, B23K 9/235, B29C 33/02, B29C 33/38, F24S 10/00, B22F 5/10

(54) **PROCÉDÉ DE RÉALISATION D'UN MODULE D'ÉCHANGEUR DE CHALEUR À AU MOINS UN CIRCUIT DE CIRCULATION DE FLUIDE**
HERSTELLUNGSVERFAHREN EINES WÄRMETAUSCHERMODULS MIT MINDESTENS EINEM FLUID-UMWÄLZKREISLAUF
METHOD FOR MANUFACTURING A HEAT EXCHANGER MODULE WITH AT LEAST ONE FLUID CIRCULATION CIRCUIT

(30) Priorité: 23.11.2018 FR 1871738
(43) Date de publication de la demande: 27.05.2020
(73) Titulaire: Commissariat à l'Energie Atomique et aux Energies Alternatives, 75015 Paris (FR)
(72) Inventeur: CHOMETTE, Sébastien, 38054 Grenoble Cedex 9 (FR); MONTEREMAND, Mathieu, 38054 Grenoble Cedex 9 (FR); VIDOTTO, Fabien, 38054 Grenoble Cedex 9 (FR)
(74) Mandataire: Nony

(56) Documents cités:
- EP-A1- 3 296 412
- DE-C1- 19 819 592
- US-A- 4 455 353
- US-A1- 2006 249 872
- US-A1- 2008 003 323
- US-A1- 2016 193 653

## Description

### Domaine technique

La présente invention concerne les échangeurs de chaleur à au moins un circuit de fluide comportant au moins un conduit.

L'invention a trait plus particulièrement à un nouveau procédé de fabrication de tels échangeurs avec au moins deux matériaux ayant des propriétés mécaniques et/ou thermiques différentes.

Les échangeurs de chaleur connus comprennent soit un, soit au moins deux circuits à canaux de circulation interne de fluide. Dans les échangeurs à un seul circuit, les échanges thermiques se réalisent entre le circuit et un fluide environnant dans lequel il baigne ou un élément auquel il faut apporter ou extraire de la chaleur comme par exemple dans les moules. Dans les échangeurs à au moins deux circuits de fluide, les échanges thermiques se réalisent entre les deux circuits de fluide.

Il est connu des réacteurs chimiques qui mettent en œuvre un procédé en continu selon lequel on injecte simultanément une quantité faible de co-réactants, à l'entrée d'un premier circuit de fluide, de préférence équipé d'un mélangeur, et on récupère le produit chimique obtenu en sortie dudit premier circuit. Parmi ces réacteurs chimiques connus, certains comprennent un deuxième circuit de fluide, appelé usuellement utilité, et dont la fonction est de contrôler thermiquement la réaction chimique, soit en apportant la chaleur nécessaire à la réaction, soit au contraire en évacuant la chaleur dégagée par celle-ci. De tels réacteurs chimiques à deux circuits de fluide avec utilité sont usuellement appelés échangeurs-réacteurs.

La présente invention concerne aussi bien la réalisation d'échangeurs de chaleur à fonction uniquement d'échanges thermiques que la réalisation d'échangeurs-réacteurs. Aussi, par « échangeur de chaleur à au moins un circuit de fluide », il faut comprendre dans le cadre de l'invention, aussi bien un échangeur de chaleur à fonction uniquement d'échanges thermiques, qu'un moule ou qu'un échangeur-réacteur.

### Technique antérieure

La plupart des échangeurs de chaleur à au moins un circuit de fluide est fabriquée à partir d'un matériau unique.

Les échangeurs à plaques sont obtenus par empilement de plaques comportant des canaux et assemblées entre elles. Les canaux sont réalisés par emboutissage de plaques, le cas échéant par ajout de feuillards pliés sous forme d'ailettes ou par usinage de rainures. L'usinage est réalisé par des moyens mécaniques, par exemple par fraisage ou par voie chimique. L'usinage chimique est usuellement, appelé gravage chimique ou électrochimique.

L'assemblage des plaques peut être obtenu par des moyens mécaniques, tels que des tirants maintenant l'empilement serré entre deux plaques épaisses et rigides disposées aux extrémités. L'étanchéité des canaux est alors obtenue par écrasement de joints rapportés.

L'assemblage peut être également obtenu par soudage, généralement limité à la périphérie des plaques, ce qui nécessite parfois d'insérer, ultérieurement au soudage, l'échangeur dans une calandre pour permettre sa tenue à la pression des fluides. L'assemblage peut encore être obtenu par brasage, en particulier pour des échangeurs pour lesquels des ailettes sont ajoutées.

L'assemblage peut enfin être obtenu par soudage par diffusion (soudage-diffusion).

La fabrication d'échangeurs peut aussi mettre en œuvre des moules réalisés par usinage dans la masse d'un seul matériau. L'usinage est réalisé ici aussi par des moyens mécaniques, par exemple par forage ou par électroérosion (technique d'enfonçage).

Lorsqu'une tenue mécanique importante est nécessaire, notamment de par la pression de fluide élevée dans l'un des circuits de l'échangeur ou en cas de sollicitation mécanique importante, le choix du matériau doit être adapté en choisissant un matériau capable de supporter de telles contraintes mécaniques.

Or, le choix d'un matériau sur des critères mécaniques ne doit pas se faire au détriment de ses propriétés thermiques.

Afin d'optimiser les deux critères de tenue mécaniques et de performances thermiques pour la fabrication d'un échangeur à au moins un circuit de fluide, des solutions ont déjà été proposées.

Une première approche est l'utilisation d'alliages qui ont des propriétés optimisées par rapport à un seul métal. Par exemple, la demande de brevet JPH04218630A décrit l'utilisation d'un alliage de cuivre avec une résistance mécanique et conductivité thermique optimisées pour la fabrication d'un moule à plastique.

Une deuxième approche est l'utilisation d'au moins deux matériaux différents, un premier dit de « structure » pour ses propriétés mécanique et un deuxième pour ses propriétés thermiques. La demande JP2002248597A propose de souder une couche en cuivre ou alliage de cuivre sur une base d'acier. Afin d'éviter la fusion du métal de base lors du soudage de la deuxième couche, il est proposé de le refroidir.

La demande de brevet EP 0 774 525 A1 propose l'application d'un revêtement de cermet sur des alliages à base de cuivre qui servent de moule. Or, l'application d'un tel revêtement génère des résistances thermiques de contact qui limitent le gain en performance thermique obtenu par l'utilisation des alliages à base de cuivre.

Cependant, les techniques de fabrication permettant d'assembler deux matériaux métalliques différents de manière intime sont peu nombreuses.

Le brasage est une des méthodes d'assemblage entre deux matériaux métalliques. Cette méthode est limitée à des assemblages de géométrie simple. Elle nécessite par ailleurs un métal d'apport pour effectuer le soudage. Or, ces caractéristiques inhérentes à cette méthode peuvent avoir des incidences sur les possibilités d'utilisation des assemblages obtenus. En effet, il faut vérifier si la résistance thermique des jonctions ainsi que les propriétés mécaniques de celles-ci doivent être compatibles avec la température d'utilisation.

Le soudage-diffusion est une technique qui permet de lier des matériaux entre eux. Cette méthode consiste à obtenir un assemblage à l'état solide en appliquant une force à chaud sur les pièces à assembler pendant un temps donné [1]. La force appliquée a une fonction double : elle permet l'accostage, c'est-à-dire la mise en contact des surfaces à souder, et elle facilite l'élimination par fluage-diffusion de la porosité résiduelle dans les joints (interfaces).

La force appliquée pendant l'assemblage par soudage-diffusion peut être mise en œuvre par compression uni-axiale à chaud. Ce procédé consiste à appliquer simultanément une température élevée et un chargement essentiellement perpendiculaire au sommet de l'empilement des pièces à assembler pendant un temps suffisant pour assurer le soudage des pièces entre-elles. Le chargement est assuré par exemple à l'aide d'une presse équipée d'un four ou simplement à l'aide de masses disposées au sommet de l'empilement des pièces à assembler. Cette opération est généralement faite sous vide pour ne pas piéger du gaz dans les interfaces. Le soudage-diffusion uniaxial est appliqué industriellement pour la fabrication d'échangeurs de chaleur à plaques.

Une limitation importante du procédé soudage-diffusion uniaxial tient au fait qu'il ne permet pas de souder des joints d'orientation quelconque par rapport à la direction d'application de la force de compression uniaxiale.

Un autre procédé alternatif pallie cet inconvénient. Dans cet autre procédé, la force est appliquée via un gaz sous pression dans une enceinte étanche. Ce procédé est communément appelé Compression Isostatique à Chaud (CIC). Un autre avantage du procédé de soudage-diffusion par CIC comparativement au procédé de soudage-diffusion uniaxial est qu'il est plus largement répandu à l'échelle industrielle.

Même si la Compression Isostatique à Chaud (CIC) permet un assemblage intime de jonctions ayant des géométries complexes, une certaine difficulté peut venir de la fabrication des différents éléments à assembler. L'usinage est réalisé par des moyens mécaniques, par exemple par fraisage, par électroérosion ou par voie chimique. L'usinage chimique est usuellement appelé gravage chimique ou électrochimique.

La demande WO 1999067047 A1 décrit un procédé d'assemblage d'un matériau en acier inoxydable martensitentique avec un deuxième matériau comprenant du cuivre par soudage diffusion.

Ces techniques, bien que précises dimensionnellement parlant et pouvant être appliquées pour des pièces de taille importante, ne permettent pas une grande liberté en termes de géométrie en trois dimensions. En effet, afin de garantir une soudure efficace, les différentes pièces devant être assemblées entre elles doivent avoir le moins de jeux possibles.

Dans certains cas, il est possible de remplacer l'un des matériaux massifs par de la poudre métallique qui sera alors densifiée lors de la mise en œuvre de la Compaction Isostatique à Chaud (CIC). Néanmoins, la morphologie des zones dans lesquelles le matériau sous forme de poudre sera situé doit permettre son introduction. Les degrés de liberté sur ces zones en termes de taille et de morphologie sont plus importants que pour l'assemblage de deux matériaux massifs, mais restent limités tout de même. De plus, le matériau sous forme de poudre est plus onéreux qu'un matériau massif de même composition du fait de l'ensemble des procédés de fabrication de la poudre (taille, morphologie et chimie de la poudre particulière). Par ailleurs, le changement de volume des zones contenant la poudre lors de la mise en œuvre du soudage-diffusion CIC doit être anticipé, un remplissage même optimisé permettant rarement de dépasser deux tiers du volume des zones vides par la poudre.

D'autres méthodes qui ont connu un essor important ces dernières années concernent la fabrication additive utilisant des métaux. Cette méthode permet d'obtenir des formes de plus en plus complexes. Par exemple, la demande WO 2015/112885 A1 décrit un procédé de fabrication d'un moule par une telle méthode. Cependant, les alliages présentant de très bonnes propriétés thermiques sont souvent ceux qui sont le moins facile à mettre en œuvre avec cette technique de fabrication additive

DE 198 19 592 C1 divulgue un procédé de réalisation d'un module d'échangeur de chaleur à au moins un circuit de fluide, comportant les étapes suivantes:
a. réalisation d'une partie ouverte d'une enveloppe métallique;
b. réalisation d'un ou plusieurs tubes métalliques d'au moins un circuit de fluide;
c. introduction d'un premier jeu d'un ou plusieurs éléments en au moins un métal ou alliage métallique fusible dans la partie ouverte de l'enveloppe, le(s) métal(ux) ou alliage(s) métallique(s) ayant une température de fusion inférieure à celles du(es) métal(ux) de l'enveloppe et du (des) tube(s);
d. assemblage entre la partie ouverte de l'enveloppe et le(s) tube(s);
e. introduction d'un deuxième jeu d'un ou plusieurs éléments en au moins un métal ou alliage métallique fusible dans la partie ouverte de l'enveloppe, le(s) métal(ux) ou alliage(s) métallique(s) ayant une température de fusion inférieure à celles du(es) métal(ux) de l'enveloppe et du (des) tube(s);
f. fermeture de manière étanche de l'enveloppe métallique, de sorte à former la forme extérieure définitive du module d'échangeur de chaleur;
g. chauffage de l'enveloppe étanche, jusqu'à la température de frittage du ou des éléments en au moins un métal ou alliage métallique fusible et prise en masse du ou des tubes;
h. refroidissement de l'ensemble, de sorte à obtenir l'assemblage définitif du module d'échangeur de chaleur.

Ce procédé ne comprend pas de fusion des éléments fusible.

Enfin, la fonderie conventionnelle permet également d'obtenir des géométries de pièces très complexes pour des matériaux de conductivité thermique élevée (alliages d'aluminium ou de cuivre) mais dans la majorité des cas, cette méthode est limitée à une utilisation d'un seul matériau. De plus, les pièces fabriquées comportent des défauts inhérents à cette méthode de fabrication comme par exemple l'apparition de porosités par les gaz solubles, les défauts formés pendant le retrait de solidification etc. Un post traitement par exemple par soudage-diffusion CIC est nécessaire afin de faire disparaître ces différents défauts.

Il existe donc un besoin d'améliorer encore les procédés de réalisation d'échangeurs de chaleur à au moins un circuit de fluide, à partir d'au moins deux matériaux différents, notamment afin de pallier les inconvénients des méthodes précitées.

Le but de l'invention est de répondre au moins partiellement à ce besoin.

### Exposé de l'invention

Pour ce faire, l'invention a pour objet un procédé de réalisation d'un module d'échangeur de chaleur à au moins un circuit de fluide comportant au moins un conduit, comportant les étapes suivantes :
a) réalisation d'une partie ouverte d'une enveloppe métallique ;
b) réalisation d'un ou plusieurs tubes métalliques d'au moins un circuit de fluide ;
c) optionnellement, introduction d'un premier jeu d'un ou plusieurs éléments en au moins un métal ou alliage métallique fusible dans la partie ouverte de l'enveloppe, le(s) métal(ux) ou alliage(s) métallique(s) ayant une température de fusion inférieure à celles du métal(ux) de l'enveloppe et du (des) tube(s);
d) assemblage entre la partie ouverte de l'enveloppe et le(s) tube(s) ;
e) introduction d'un deuxième jeu d'un ou plusieurs éléments en au moins un métal ou alliage métallique fusible dans la partie ouverte de l'enveloppe, le(s) métal(ux) ou alliage(s) métallique(s) ayant une température de fusion inférieure à celles du(es) métal(ux) de l'enveloppe et du (des) tube(s);
f) fermeture de manière étanche de l'enveloppe métallique, de sorte à former la forme extérieure définitive du module d'échangeur de chaleur ;
g) chauffage de l'enveloppe étanche, jusqu'à la fusion du(des) élément(s) en au moins un métal ou alliage métallique fusible et prise en masse du (des) tube(s);
h) refroidissement de l'ensemble, de sorte à obtenir l'assemblage définitif du module d'échangeur de chaleur.

Ainsi, l'invention est essentiellement un procédé de réalisation d'un module d'échangeur de chaleur à au moins un circuit de fluide qui combine une structure ayant des propriétés thermiques élevées du fait de la présence d'un ou plusieurs matériaux ayant de bonnes caractéristiques thermiques et l'utilisation d'un matériau avec de bonnes propriétés mécaniques pour les éléments de structure du module d'échangeur de chaleur.

Par ailleurs, si un cycle de soudage par diffusion par CIC est mis en œuvre il permettra d'éliminer les défauts qui proviennent de la fusion de ces matériaux, pour améliorer davantage les propriétés mécaniques et thermiques du module d'échangeur de chaleur selon la présente invention.

La présente invention présente au moins les avantages suivants par rapport aux procédés existants de fabrication de module d'échangeur de chaleur de chaleur à au moins un circuit de fluide :
- tout d'abord, elle permet de réduire de manière conséquente la complexité de réalisation d'un échangeur de chaleur à au moins un circuit de fluide constitué d'au moins deux matériaux différents. En effet, les étapes de mise en forme du métal présentant de bonnes propriétés thermiques sont remplacées par une étape de fusion d'un métal ce qui facilite son intégration à un module d'échangeur de chaleur ;
- ensuite, du fait de l'étape de fusion, le ou les matériaux fondus peuvent occuper le volume interne du module d'échangeur de chaleur de manière plus efficace. De ce fait, le ou les circuits de fluide peuvent être complexifiés davantage, afin d'améliorer les caractéristiques thermiques des modules fabriqués ;
- enfin, contrairement au procédé mettant en œuvre uniquement des poudres métalliques et du frittage, le remplissage de l'intérieur du module d'échangeur de chaleur par un ou des métal(ux) ou alliages fusibles est optimal, à l'issue de l'étape de fusion. Ainsi, ce remplissage optimal permet de minimiser les déformations si un traitement par compression isostatique à chaud (CIC) est mis en œuvre après l'assemblage du module d'échangeur de chaleur.

Bien que la mise en œuvre d'une étape de fusion puisse altérer les propriétés thermiques du(des) métal(ux) ou de(s) l'alliage(s) fusible(s), notamment du fait des modifications chimiques qui peuvent se produire, ces changements n'effacent pas les gains en termes de propriétés thermiques globales du module d'échangeur par rapport à une version d'un module réalisé avec un seul type de matériau.

Par « fusion » on entend ici le sens usuel du terme, à savoir le passage d'un matériau d'un état solide à un état liquide.

Par « métal ou alliage métallique fusible » on entend ici le sens usuel du terme, à savoir un métal ou alliage de métal capable de fondre lorsqu'il est chauffé à et au-delà de son point de fusion. Dans le cadre de l'invention on peut avoir un mélange de plusieurs métaux ou alliages fusibles.

Selon un autre mode de réalisation, après l'étape a), on réalise une étape a1), selon laquelle on fixe de manière étanche au moins un réservoir métallique logeant un ou plusieurs éléments en au moins un métal ou alliage métallique fusible sur la partie ouverte de l'enveloppe, le(s) métal(ux) du réservoir ayant une température de fusion supérieure à celle(s) du(des) métal(ux) ou alliage(s) métallique(s) fusible.

Ce mode est avantageux lorsque la géométrie de l'enveloppe métallique ne permet pas un remplissage aisé de cette dernière par introduction d'éléments en un métal ou alliage métallique fusible.

Dans une variante de réalisation, le(s) élément(s) en au moins un métal ou alliage métallique fusible introduit(s) dans l'enveloppe, le cas échéant à l'étape c) et/ou à l'étape e) et le cas échéant dans le(s) réservoir(s) à l'étape a1) est(sont) constitué(s) d'une ou plusieurs pièces de récupération et/ou de poudre.

Avantageusement, après l'étape h), on réalise une étape i) d'usinage intermédiaire de découpe du réservoir de métal(ux) ou alliage(s) métallique(s).

Selon une variante avantageuse, après l'étape h) et le cas échéant après l'étape i), on réalise une étape j) au cours de laquelle on applique un cycle de Compression Isostatique à Chaud (CIC) à l'assemblage définitif. Cette variante est avantageuse car elle permet d'éliminer les défauts qui peuvent apparaitre lors des étapes g) de fusion et h) de refroidissement.

L'étape g) consiste en un chauffage de préférence à une température comprise entre 1090°C et 1200°C avec une montée en température d'une durée comprise entre 1h et 4h et un maintien en température d'une durée de 1h à 6h.

Afin d'obtenir les côtes et l'état de surface désirés pour le module d'échangeur de chaleur fini, de préférence après l'étape h) et le cas échéant après l'étape j) on réalise une étape k) de décapage des surfaces extérieures de l'assemblage.

L'étape j) consiste en un cycle de CIC à une température comprise entre 850°C et 1080°C, de préférence entre 1000°C et 1080°C, une pression comprise entre 500 et 1500 bar avec une montée en température d'une durée comprise entre 1h et 4h et un maintien en température d'une durée de 1h à 6h.

Bien évidemment, la température de travail pour le cycle de CIC est inférieure à la température de fusion du métal fusible. Il peut être avantageux que le métal fusible soit ramolli pendant le cycle CIC afin d'éliminer rapidement les défauts qui peuvent apparaitre lors des étapes g) de fusion et h) de refroidissement.

Avantageusement, la température de fusion du métal ou alliage métallique a une température de fusion bien inférieure à celles du métal de l'enveloppe, du ou des tubes du circuit de fluide ainsi que le métal du réservoir. Ainsi, la température de fusion du au moins un métal ou alliage métallique fusible est inférieure d'au moins 100°C, de préférence 150-200 °C de l'enveloppe métallique, du ou des tubes et le cas échéant du réservoir.

Le cuivre est un matériau avec de bonnes propriétés thermiques, dans un mode le métal fusible est du cuivre, de préférence du cuivre Cu-A1.

L'acier est un matériau présentant de bonnes propriétés mécaniques, dans un mode l'enveloppe métallique, le ou les tubes et le cas échéant le réservoir sont en acier inoxydable, de préférence de l'acier inoxydable de type 1.4404.

L'invention a également pour objet un module d'échangeur de chaleur à au moins un circuit de fluide obtenu selon le procédé tel que décrit précédemment.

Selon une variante de ce mode, l'une des surfaces extérieures est destinée à servir de surface de moulage.

L'invention a aussi pour objet une utilisation d'un module d'échangeur de chaleur comme ci-dessus en tant que partie de récepteurs pour centrales solaires à concentration.

L'invention a enfin pour objet une utilisation d'un module d'échangeur comme ci-dessus en tant que partie de moule de plasturgie.

D'autres avantages et caractéristiques de l'invention ressortiront mieux à la lecture de la description détaillée d'exemples de mise en œuvre de l'invention faite à titre illustratif et non limitatif en référence aux figures suivantes.

### Brève description des dessins

[Fig 1] est une vue en perspective d'un tube constituant une partie du circuit de refroidissement;
[Fig 2] est une vue en perspective éclatée des pièces d'un réservoir à remplir avec un métal fusible;
[Fig 3] est une vue en perspective des pièces en métal fusible utilisées pour la réalisation d'un module d'échangeur de chaleur à un circuit de fluide selon l'invention ;
[Fig 4] est une vue en perspective d'une partie ouverte d'une enveloppe du module d'échangeur selon la présente invention ;
[Fig 5] est une vue en perspective d'un élément de fermeture complémentaire de la partie ouverte de l'enveloppe de la figure 4 ;
[Fig 6] est une vue en perspective de deux réservoirs de métal fusible sur la partie agencés sur la partie ouverte de l'enveloppe ;
[Fig 7] est une vue en perspective de l'intérieur de la partie ouverte de l'enveloppe dans laquelle est logé un premier jeu d'éléments en métal fusible;
[Fig 8] est une vue en perspective de l'assemblage des tubes constituant le circuit de refroidissement dans la partie ouverte de l'enveloppe selon la figure 7;
[Fig 8A] est une vue de détail de la zone de soudure d'étanchéité entre le circuit de refroidissement et la partie latérale de l'enveloppe de l'assemblage de la figure 8 ;
[Fig 8B] est une vue de détail de la zone de soudure d'étanchéité entre les tubes et la partie inférieure de l'enveloppe de l'assemblage de la figure 8 ;
[Fig 9] est une vue en perspective de l'intérieur de la partie ouverte de l'enveloppe selon la figure 8c dans laquelle est logé un deuxième jeu d'éléments en métal fusible, entre les coudes des tubes ;
[Fig 10] est une vue en perspective de l'intérieur de la partie ouverte de l'enveloppe selon la figure 9 dans laquelle est logé un troisième jeu d'éléments en métal fusible;
[Fig 11] est une vue en perspective illustrant la mise en place de l'élément de fermeture de la partie ouverte de l'enveloppe selon la figure 10;
[Fig 12] est une vue en perspective illustrant la mise en place de pièces en métal fusible dans les réservoirs agencés sur l'enveloppe ;
[Fig 13] est une vue en perspective illustrant la fermeture par des couvercles d'étanchéité des réservoirs selon la figure 12;
[Fig 14] est une coupe longitudinale d'un module d'échangeur de chaleur à un circuit de fluide obtenu selon le procédé de réalisation conforme à l'invention.

### Description détaillée

Dans l'exemple illustré selon l'invention, on fabrique un échangeur de chaleur qui constitue un demi-moule avec un seul circuit de fluide, dit circuit de refroidissement. Après la mise en œuvre du procédé selon la présente invention, le module aura une longueur L, une largeur 1 et une hauteur h. Une partie du métal fusible sera présent à l'intérieur de l'assemblage sous forme de pièces massives simples et un apport en métal fusible en complément pour un remplissage efficace se fera au moyen de réservoirs additionnels fixés sur l'enveloppe d'un module d'échangeur de chaleur.

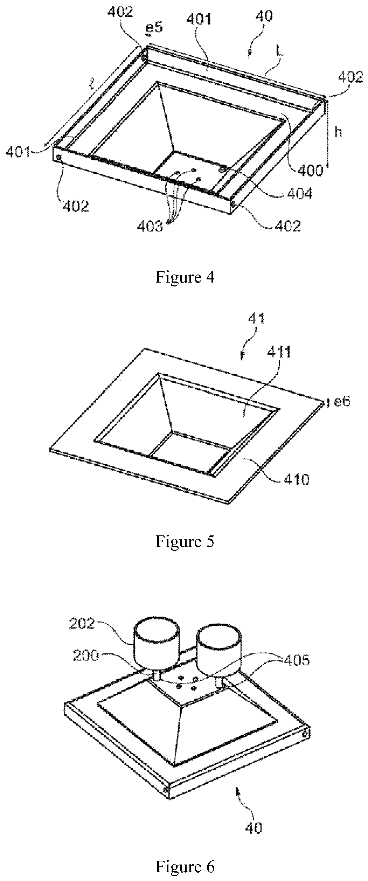

Etape a) : On réalise d'abord une partie ouverte 40 d'une enveloppe creuse d'un module d'échangeur de chaleur (figure 4). La partie ouverte 40 de l'enveloppe en forme de tronc de pyramide est fabriquée à partir d'une plaque d'épaisseur e5. Cette partie de l'enveloppe est constituée de deux parties :
- une première partie rectangulaire avec des surfaces planes 400 et des surfaces latérales 401 comprenant quatre trous 402 pour le circuit de refroidissement ;
- une deuxième partie en forme de tronc de pyramide comprenant quatre trous 403 pour le circuit de refroidissement et deux trous 404 de connexion à des réservoirs de pièces en métal fusible fixés ultérieurement.

A titre d'exemple, la partie ouverte 40 de l'enveloppe est réalisée à partir d'une plaque en acier inoxydable 1.4404, d'épaisseur e5 égale à 2mm. La plaque est découpée par laser et les trous 402, 403, 404 percés également par laser. Puis, la plaque est mise en forme par pliage. Les lignes de jonctions après la mise en forme par pliage sont rendues étanche par soudage TIG (« Tungten Inert Gas ») sans métal d'apport.

Etape a1) : Deux réservoirs 20 de pièces en métal fusible sont réalisés chacun à partir de quatre pièces distinctes, à savoir un tube d'introduction 200, de diamètre intérieur d3 et extérieur d4, qui va permettre d'acheminer la matière en fusion dans l'enveloppe, un fond de réservoir 201, un corps principal tubulaire 202, de diamètre intérieur d5 et extérieur d6 et de hauteur hl, ainsi que d'un couvercle 203 pour la fermeture du réservoir 20
(figure 2).

A titre d'exemple, l'ensemble des pièces constitutives des réservoirs sont en acier inoxydable 1.4404. Le tube d'introduction 200 a un diamètre intérieur d3 égal à 8mm et un diamètre extérieur d4 égal à 10mm, le corps principal 202 a un diamètre intérieur d5 égal à 66,7mm et un diamètre extérieur d6 égal à 70,5mm pour une hauteur h1 égale à 50mm.

On fixe ensuite de manière étanche les réservoirs 20 sur la partie ouverte de l'enveloppe au niveau des trous 404. Les différentes pièces 200, 201, 202 constitutives des réservoirs 20, à l'exception des couvercles 203, sont déjà assemblées de manière étanche entre elles. A ce stade les réservoirs sont vides et ouverts (figure 6).

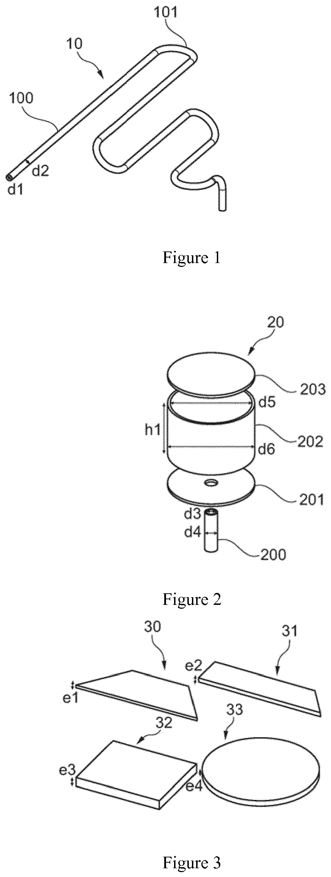

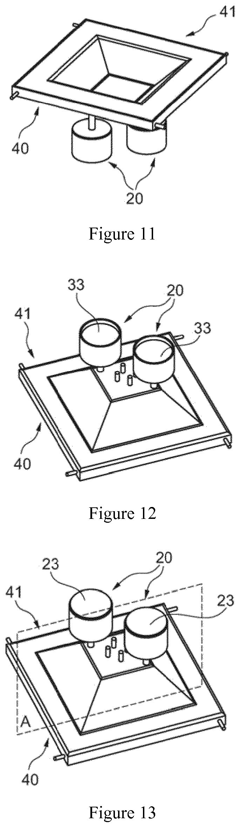

On introduit dans les réservoirs 20 des pièces 33, sous la forme de galettes, en métal fusible (figure 12). Les pièces 33 en métal fusible sont réalisées à partir de plaques d'épaisseurs e4 (figure 3).

Les couvercles 23 sont ensuite mis en place sur les réservoirs 20 et les réservoirs sont fermés de manière étanche.

A titre d'exemple, les pièces constitutives des réservoirs 20 sont assemblées et rendues étanche par soudage TIG sans métal d'apport. Les réservoirs 20 sont fixés sur la partie ouverte 40 de l'enveloppe et les jonctions sont rendues étanche aussi par soudage TIG sans métal d'apport.

Etape b) : On réalise ensuite des tubes 10 qui constituent le circuit de refroidissement du module d'échangeur de chaleur. Le circuit de refroidissement est réalisé par quatre tubes 10 de diamètre interne d1 et de diamètre d2 mis en forme (figure 1). Ces tubes 10 présentent des portions droites 100 et des portions de retournement ou coudes 101 en forme de U.

A titre d'exemple, les tubes utilisés sont en acier inoxydable 1.4404 de diamètre intérieur d1 égal à 4mm et de diamètre extérieur d2 égal à 6mm. Ces tubes sont mis en forme par cintrage mécanique.

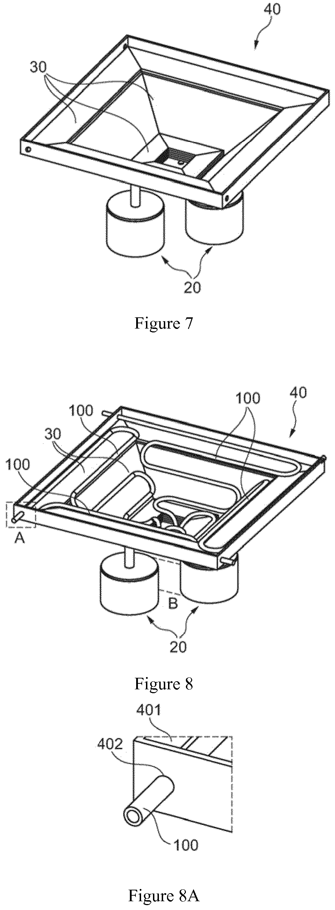

Etape c) : On introduit dans la partie ouverte 40 de l'enveloppe un premier jeu de pièces 30 en métal fusible sur les surfaces planes 400, sur les surfaces du tronc de pyramide ainsi que sur le fond 404 tout en laissant les trous 403 accessibles, afin d'agencer les tubes 10 du circuit de refroidissement (figure 7).

Les pièces 30 en métal fusible sont réalisées à partir de plaques d'épaisseurs e1 (figure 3) et les dimensions des pièces sont adaptées selon leur emplacement à l'intérieur de la partie ouverte 40 de l'enveloppe.

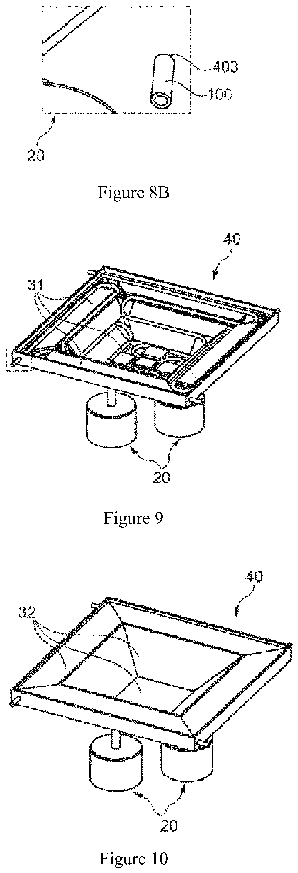

Etape d): On réalise ensuite l'assemblage entre les quatre tubes 10 du circuit de refroidissement et la partie ouverte 40 de l'enveloppe (figure 8).

Une portion d'extrémité 100 de chaque tube 10 traverse une des surfaces latérales de la partie ouverte 40 de l'enveloppe par un des trous 402 (figure 8A).

Une portion d'extrémité 100 opposée de chaque tube 10 traverset la partie inférieure de la partie ouverte de l'enveloppe par un des trous 403 (figure 8B).

Puis, les jonctions entre portions d'extrémités 100 et respectivement les trous 402 et 403 sont rendues étanches.

Etape e) : On introduit dans la partie ouverte 40 de l'enveloppe un deuxième jeu 31 de pièces en métal fusible, une fois les tubes 10 du circuit de refroidissement mis en place (figure 9).

Ce deuxième jeu 31 de pièces en métal fusible permet de combler davantage les espaces vides entre les tubes 10 du circuit de refroidissement et la partie ouverte 40 de l'enveloppe (figure 9).

Les pièces 31 en métal fusible sont réalisées à partir de plaques d'épaisseurs e2 (figure 3) et les dimensions des pièces sont adaptées selon leur emplacement à l'intérieur de la partie ouverte 40 de l'enveloppe.

On introduit ensuite un troisième jeu 32 de pièces en métal fusible, de sorte à entièrement recouvrir tous les tubes 10 du circuit de refroidissement et de délimiter une forme complémentaire à celle d'un élément de fermeture 41 de l'enveloppe (figure 10).

Les pièces 32 en métal fusible sont réalisées à partir de plaques d'épaisseurs e3 (figure 3) et les dimensions des pièces sont adaptées selon leur emplacement à l'intérieur de la partie ouverte 40 de l'enveloppe.

A titre d'exemple, le métal fusible des pièces 30, 31, 32 mises en place dans les étapes c) et e) est du cuivre type Cu-A1. Chacune des pièces 30, 31, 32 est une tôle d'épaisseur e1=e2=e3 égale à 3mm. Les pièces 30, 31 et 32 de diverses formes sont découpées en utilisant par exemple la technique de découpe laser.

Etape f) : On réalise un élément 41 de fermeture de forme complémentaire à celle de la partie ouverte 40 de l'enveloppe remplie selon la figure 10.

Ainsi, l'élément de fermeture 41 comprend aussi une partie avec des surfaces planes 410 entourant une partie 411 en forme de tronc de pyramide (figure 5).

On ferme ensuite de manière étanche l'assemblage obtenu par les étapes précédentes illustré en figure 10 par l'élément de fermeture 41 (figure 11).

On réalise ensuite une soudure étanche entre l'élément de fermeture 41 et la partie ouverte 40 de l'enveloppe.

A titre d'exemple, l'élément de fermeture 41 est réalisé à partir de plaques en acier inoxydable 1.4404 d'épaisseur e6 égale à 4mm. Les plaques sont découpées par laser et sont mises en forme par pliage.

Les lignes de jonctions après la mise en forme par pliage sont rendues étanche par soudage TIG (« Tungten Inert Gas ») sans métal d'apport.

L'ensemble des étanchéités entre les tubes 10 et au niveau des trous 402 et 403 de la partie ouverte 40 de l'enveloppe, entre la partie ouverte 40 de l'enveloppe et l'élément de fermeture 41 est également réalisé par soudure TIG sans métal d'apport.

Etape g) : On met l'assemblage complet dans un four pour réaliser la fusion du métal fusible. Il est avantageux que les réservoirs 20 soient situés sur le dessus de l'assemblage pour permettre au métal fondu de couler à l'intérieur de l'assemblage.

A titre d'exemple, la fusion est réalisée dans un four sous gaz neutre à une température de 1150°C avec une montée en température d'une durée de 3h et un maintien d'une durée de 3h.

Etape h) : On réalise un refroidissement de l'ensemble, de sorte à obtenir l'assemblage définitif du module d'échangeur de chaleur.

Afin d'éviter des chocs thermiques par un refroidissement rapide, il est avantageux de réaliser une descente à température ambiante de manière contrôlée, par exemple dans un four.

A titre d'exemple on réalise le refroidissement de l'ensemble dans un four avec une rampe de descente contrôlée d'une durée minimum de 3h, pour le passage de 1150°C à 20°C.

Etape i) : On réalise une étape d'usinage intermédiaire après refroidissement de l'assemblage pour enlever les deux réservoirs 20. On obtient ainsi un module d'échangeur de chaleur 1 avec un métal solidifié remplissant le volume intérieur de l'enveloppe.

A titre d'exemple, les réservoirs sont découpés par sciage mécanique au niveau du tube d'introduction 200.

Etape j) : On met ensuite l'assemblage du module d'échangeur de chaleur dans une enceinte de Compression Isostatique à Chaud (CIC) pour soumettre l'assemblage à un cycle de CIC. A titre d'exemple, lorsque le métal fusible est du cuivre de type Cu-A1, le cycle de CIC est réalisé à une température de 1000°C avec une montée en température d'une durée de 3h et un maintien d'une durée de 2h.

Etape k) : On réalise enfin un décapage des surfaces extérieures du module d'échangeur de chaleur. Un usinage de parachèvement de la zone moulante qui est la surface extérieure de l'élément de fermeture 41 est réalisé pour obtenir les cotes et l'état de surface désirés.

A titre d'exemple, le décapage est réalisé par voie chimique pour enlever les éventuelles traces d'oxydation dues au traitement thermique. L'usinage de parachèvement de la zone moulante défini par la surface extérieure de la pièce 41 est réalisé par fraisage.

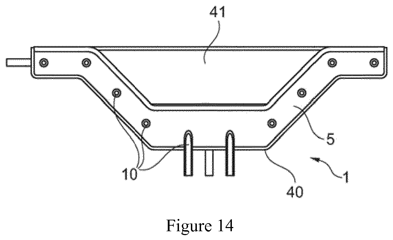

Après la mise en œuvre du procédé selon l'invention, on obtient un module d'échangeur de chaleur 1 dans lequel le volume à l'intérieur de l'enveloppe 40, 41 hormis le circuit de refroidissement 100 est entièrement rempli par le métal solidifié 5 (figure 14).

D'autres variantes et améliorations peuvent être apportées sans pour autant sortir du cadre de l'invention.

## Revendications

1. Procédé de réalisation d'un module d'échangeur de chaleur à au moins un circuit de fluide, comportant les étapes suivantes :
a) réalisation d'une partie ouverte (40) d'une enveloppe métallique ;
b) réalisation d'un ou plusieurs tubes métalliques (10) d'au moins un circuit de fluide ;
c) optionnellement, introduction d'un premier jeu d'un ou plusieurs éléments (30) en au moins un métal ou alliage métallique fusible dans la partie ouverte de l'enveloppe, le(s) métal(ux) ou alliage(s) métallique(s) ayant une température de fusion inférieure à celles du(es) métal(ux) de l'enveloppe et du (des) tube(s) (10) ;
d) assemblage entre la partie ouverte (40) de l'enveloppe et le(s) tube(s) (10);
e) introduction d'un deuxième jeu d'un ou plusieurs éléments (31, 32) en au moins un métal ou alliage métallique fusible dans la partie ouverte de l'enveloppe, le(s) métal(ux) ou alliage(s) métallique(s) ayant une température de fusion inférieure à celles du(es) métal(ux) de l'enveloppe et du (des) tube(s) (10) ;
f) fermeture de manière étanche de l'enveloppe métallique, de sorte à former la forme extérieure définitive du module d'échangeur de chaleur ;
g) chauffage de l'enveloppe étanche, jusqu'à la fusion du ou des éléments en au moins un métal ou alliage métallique fusible (30, 31, 32) et prise en masse du ou des tubes ;
h) refroidissement de l'ensemble, de sorte à obtenir l'assemblage définitif du module d'échangeur de chaleur.

2. Procédé selon la revendication 1, selon lequel, après l'étape a), on réalise une étape al/, selon laquelle on fixe de manière étanche au moins un réservoir (20) métallique logeant un ou plusieurs éléments (33) en au moins un métal ou alliage métallique fusible sur la partie ouverte de l'enveloppe, le(s) métal(ux) du réservoir (20) ayant une température de fusion supérieure à celle(s) du(des) métal(ux) ou alliage(s) métallique(s) fusible.

3. Procédé selon l'une des revendications 1 ou 2, selon lequel, le(s) élément(s) en au moins un métal ou alliage métallique fusible introduit(s) dans l'enveloppe à l'étape c/ et/ou à l'étape e/ est(sont) constitué(s) d'une ou plusieurs pièces de récupération et/ou de poudre.

4. Procédé selon l'une quelconque des revendications précédentes, selon lequel après l'étape h/, on réalise une étape i/ d'usinage intermédiaire de découpe du réservoir (20) de métal(ux) ou alliage(s) métallique(s).

5. Procédé selon l'une quelconque des revendications précédentes, selon lequel après l'étape h/ et le cas échéant après l'étape i/, on réalise une étape j/ au cours de laquelle on applique un cycle de compression isostatique à chaud (CIC) à l'assemblage définitif.

6. Procédé selon l'une quelconque des revendications précédentes, selon lequel, l'étape g/ consiste en un chauffage à une température comprise entre 1090°C et 1200°C avec une montée en température d'une durée comprise entre 1h et 4h et un maintien en température d'une durée de 1h à 6h.

7. Procédé selon l'une quelconque des revendications précédentes, selon lequel, après l'étape h/ et le cas échéant après l'étape j/ on réalise une étape k/ de décapage des surfaces extérieures de l'assemblage.

8. Procédé selon l'une quelconque des revendications précédentes, selon lequel, l'étape j/ consiste en un cycle de CIC à une température comprise entre 850°C et 1080°C, de préférence entre 1000°C et 1080°C, une pression comprise entre 500 et 1500 bar avec une montée en température d'une durée comprise entre 1h et 4h et un maintien en température d'une durée de 1h à 6h.

9. Procédé selon l'une quelconque des revendications précédentes, selon lequel, la température de fusion du au moins un métal ou alliage métallique fusible est inférieure d'au moins 100°C, de préférence entre 150°C et 200 °C de l'enveloppe métallique, du ou des tubes et le cas échéant du réservoir.

10. Procédé selon l'une quelconque des revendications précédentes, selon lequel le métal fusible est du cuivre, de préférence du cuivre Cu-A1.

11. Procédé selon l'une quelconque des revendications précédentes, selon lequel, l'enveloppe métallique, le ou les tubes et le cas échéant le réservoir sont en acier inoxydable, de préférence de l'acier inoxydable de type 1.4404.

12. Module d'échangeur de chaleur à au moins un circuit de fluide obtenu selon le procédé selon l'une quelconque des revendications précédentes.

13. Module d'échangeur de chaleur à au moins un circuit de fluide selon la revendication 12 dont l'une des surfaces extérieures est destinée à servir de surface de moulage.

14. Utilisation d'un module d'échangeur selon la revendication 12 en tant que partie de récepteurs pour centrales solaires à concentration.

15. Utilisation d'un module d'échangeur selon la revendication 12 ou 13 en tant que partie de moule de plasturgie.

## Patentansprüche

1. Verfahren zur Herstellung eines Wärmetauschermoduls mit mindestens einem Fluidkreislauf, umfassend die folgenden Schritte:
a) Herstellen eines offenen Teils (40) eines Metallgehäuses;
b) Herstellen eines oder mehrerer Metallrohre (10) mindestens eines Fluidkreislaufs;
c) optional, Einführen eines ersten Satzes aus einem oder mehreren Elementen (30) aus mindestens einem schmelzbaren Metall oder einer schmelzbaren Metalllegierung in den offenen Teil des Gehäuses, wobei das(die) Metalle oder die Metalllegierung(en) eine geringere Schmelztemperatur als das(die) Metalle(e) des Gehäuses und des(der) Rohre(s) (10) hat(haben);
d) Montage zwischen dem offenen Teil (40) des Gehäuses und dem(den) Rohr(en) (10);
e) Einführen eines zweiten Satzes aus einem oder mehreren Elementen (31, 32) aus mindestens einem schmelzbaren Metall oder einer schmelzbaren Metalllegierung in den offenen Teil des Gehäuses, wobei das(die) Metall(e) oder die Metalllegierung(en) eine geringere Schmelztemperatur als das(die) Metalle(e) des Gehäuses und des(der) Rohre(s) (10) hat(haben);
f) dichtes Verschließen des Metallgehäuses, so dass die endgültige äußere Form des Wärmetauschermoduls gebildet wird;
g) Erhitzen des dichten Gehäuses bis zum Schmelzen des oder der Elemente aus mindestens einem schmelzbaren Metall oder einer schmelzbaren Metalllegierung (30, 31, 32) und Erstarren des oder der Rohre in der Masse;
h) Abkühlen der Einheit, so dass die endgültige Anordnung des Wärmetauschermoduls erhalten wird.

2. Verfahren nach Anspruch 1, bei dem nach dem Schritt a) ein Schritt a1) ausgeführt wird, gemäß dem man auf dichte Weise mindestens einen Metallbehälter (20), der ein oder mehrere Elemente (33) aus mindestens einem schmelzbaren Metall oder einer schmelzbaren Metalllegierung aufnimmt, am offenen Teil des Gehäuses befestigt, wobei das(die) Metall(e) des Behälters (20) eine höhere Schmelztemperatur als das(die) schmelzbare(n) Metall(e) oder die schmelzbare(n) Metalllegierung(en) hat (haben).

3. Verfahren nach einem der Ansprüche 1 oder 2, gemäß dem das(die) Element(e) aus mindestens einem schmelzbaren Metall oder einer schmelzbaren Metalllegierung, das(die) im Schritt c) und/oder im Schritt e) in das Gehäuse eingeführt wird(werden), aus einem oder mehreren Recyclingteilen und/oder Pulver besteht(bestehen).

4. Verfahren nach einem der vorhergehenden Ansprüche, gemäß dem nach dem Schritt h) ein Schritt i) der Zwischenbearbeitung zum Abschneiden des Behälters (20) für Metall(e) oder Metalllegierung(en) ausgeführt wird.

5. Verfahren nach einem der vorhergehenden Ansprüche, gemäß dem nach dem Schritt h) und gegebenenfalls nach dem Schritt i) ein Schritt j) ausgeführt wird, in dessen Verlauf man einen Zyklus des heißisostatischen Pressens (HIP) auf die endgültige Anordnung anwendet.

6. Verfahren nach einem der vorhergehenden Ansprüche, gemäß dem der Schritt g) in einem Erhitzen bis auf eine Temperatur zwischen 1090 °C und 1200 °C mit einem Temperaturanstieg mit einer Dauer zwischen 1 h und 4 h und einer Temperaturhaltung mit einer Dauer von 1 h bis 6 h besteht.

7. Verfahren nach einem der vorhergehenden Ansprüche, gemäß dem nach dem Schritt h) und gegebenenfalls nach dem Schritt j) ein Schritt k) des Beizens der Außenoberflächen der Anordnung ausgeführt wird.

8. Verfahren nach einem der vorhergehenden Ansprüche, gemäß dem der Schritt j) in einem HIP-Zyklus bei einer Temperatur zwischen 850 °C und 1080 °C, bevorzugt zwischen 1000 °C und 1080 °C, einem Druck zwischen 500 und 1500 bar mit einem Temperaturanstieg mit einer Dauer zwischen 1 h und 4 h und einer Temperaturhaltung mit einer Dauer von 1 h bis 6 h besteht.

9. Verfahren nach einem der vorhergehenden Ansprüche, gemäß dem die Schmelztemperatur des mindestens einen schmelzbaren Metalls oder der mindestens einen schmelzbaren Metalllegierung um mindestens 100 °C, bevorzugt zwischen 150 °C und 200 °C, geringer des Metallgehäuses, des oder der Rohre und gegebenenfalls des Behälters ist.

10. Verfahren nach einem der vorhergehenden Ansprüche, gemäß dem das schmelzbare Metall Kupfer ist, bevorzugt Cu-Al-Kupfer.

11. Verfahren nach einem der vorhergehenden Ansprüche, gemäß dem das Metallgehäuse, das oder die Rohre und gegebenenfalls der Behälter aus nichtrostendem Stahl sind, bevorzugt aus nichtrostendem Stahl der Sorte 1.4404.

12. Wärmetauschermodul mit mindestens einem Fluidkreislauf, das nach dem Verfahren nach einem der vorhergehenden Ansprüche erhalten wird.

13. Wärmetauschermodul mit mindestens einem Fluidkreislauf nach Anspruch 12, bei dem eine der Außenoberflächen dazu bestimmt ist, als Formoberfläche zu dienen.

14. Verwendung eines Wärmetauschermoduls nach Anspruch 12 als Teil von Empfängern für solarthermische Kraftwerke.

15. Verwendung eines Wärmetauschermoduls nach Anspruch 12 oder 13 als Teil einer Form zur Kunststoffverarbeitung.

## Claims

1. Method for producing a heat exchanger module having at least one fluid circuit, comprising the following steps:
a) producing an open part (40) of a metal shell;
b) producing one or more metal tubes (10) of at least one fluid circuit;
c) optionally, introducing a first set of one or more elements (30) made of at least one fusible metal alloy or metal into the open part of the shell, the metal (s) or metal alloy (s) having a melting temperature lower than those of the metal(s) of the shell and of the tube(s) (10);
d) assembling the open part (40) of the shell and the tube(s) (10);
e) introducing a second set of one or more elements (31, 32) made of at least one fusible metal alloy or metal into the open part of the shell, the metal (s) or metal alloy(s) having a melting temperature lower than those of the metal(s) of the shell and of the tube(s) (10);
f) closing the metal shell in a sealed manner, so as to form the final exterior form of the heat exchanger module;
g) heating the sealed shell until the element(s) (30, 31, 32) made of at least one fusible metal alloy or metal melt and the tube(s) harden;
h) cooling the whole so as to obtain the final assembly of the heat exchanger module.

2. Method according to Claim 1, wherein, after step a), a step a1) is carried in out, in which at least one metal reservoir (20) accommodating one or more elements (33) made of at least one fusible metal alloy or metal is fastened in a sealed manner to the open part of the shell, the metal(s) of the reservoir (20) having a melting temperature higher than that/those of the fusible metal alloy(s) or metal(s).

3. Method according to either of Claims 1 and 2, wherein the element(s) made of at least one fusible metal alloy or metal that has/have been introduced into the shell in step c) and/or in step e) is/are made from one or more recovered parts and/or powder.

4. Method according to any one of the preceding claims, wherein, after step h), a step i) of intermediate cutting machining of the reservoir (20) from metal (s) or metal alloy(s) is carried out.

5. Method according to any one of the preceding claims, wherein, after step h) and, if necessary, after step i), a step j), during which a hot isostatic pressing (HIP) cycle is applied to the final assembly, is carried out.

6. Method according to any one of the preceding claims, wherein step g) consists in heating to a temperature of between 1090°C and 1200°C with a rise in temperature for a time of between 1 h and 4 h and holding of the temperature for a time of 1 h to 6 h.

7. Method according to any one of the preceding claims, wherein, after step h) and, if necessary, after step j), a step k) of pickling the outer surfaces of the assembly is carried out.

8. Method according to any one of the preceding claims, wherein step j) consists of a HIP cycle at a temperature of between 850°C and 1080°C, preferably between 1000°C and 1080°C, a pressure of between 500 and 1500 bar with a rise in temperature for a time of between 1 h and 4 h and holding of the temperature for a time of 1 h to 6 h.

9. Method according to any one of the preceding claims, wherein the melting temperature of the at least one fusible metal alloy or metal is at least 100°C, preferably between 150°C and 200°C lower than the metal shell, the tube(s) and, if necessary, the reservoir.

10. Method according to any one of the preceding claims, wherein the fusible metal is copper, preferably Cu-A1 copper.

11. Method according to any one of the preceding claims, wherein the metal shell, the tube(s) and, if necessary, the reservoir are made of stainless steel, preferably stainless steel of the type 1.4404.

12. Heat exchanger module having at least one fluid circuit obtained by the method according to any one of the preceding claims.

13. Heat exchanger module having at least one fluid circuit according to Claim 12, one of the outer surfaces of which is intended to act as a moulding surface.

14. Use of a heat exchanger module according to Claim 12 as part of receivers for concentrated solar power plants.

15. Use of a heat exchanger module according to Claim 12 or 13 as part of a plastics-processing mould.
